# EUROPÄISCHE PATENTSCHRIFT

(11) **EP 3 289 232 B1**
(45) Veröffentlichungstag und Bekanntmachung des Hinweises auf die Patenterteilung: **17.07.2019**
(21) Anmeldenummer: 16713327.1
(22) Anmeldetag: 17.03.2016
(51) Int. Cl.: F16B 31/04, B25B 29/02, F16B 39/04

(54) **SPANNMUTTER**
CLAMPING NUT
ÉCROU DE SERRAGE

(30) Priorität: 15.06.2015 EP 15172132
(43) Veröffentlichungstag der Anmeldung: 07.03.2018
(73) Patentinhaber: Siemens Aktiengesellschaft, 80333 München (DE)
(72) Erfinder: KURY, Peter, 45257 Essen (DE)
(86) Internationale Anmeldenummer: PCT/EP2016/055747
(87) Internationale Veröffentlichungsnummer: WO 2016/202474

(56) Entgegenhaltungen:
- WO-A1-01/12999
- DE-A1- 3 611 251
- US-A- 5 083 889

## Beschreibung

Die Erfindung betrifft eine Spannmutter, umfassend einen im Wesentlichen ringförmigen Mutterkörper, welcher eine radiale Außenfläche, eine zentrale zylindrische Öffnung mit einem Innengewinde, sowie eine erste und eine zweite axiale Außenfläche, die an entgegengesetzten axialen Seiten angeordnet und kreisscheibenförmig sind, bildet, wobei in den Mutterkörper eine Mehrzahl von zylindrischen Öffnungen mit jeweils einem Innengewinde eingebracht ist, die sich von der ersten zur zweiten axialen Außenfläche erstrecken.

Spannmuttern sind Muttern, in deren Mutterkörper in der Regel parallel zur zentralen Gewindeöffnung weitere Gewindeöffnungen eingebracht sind. Sie werden auch als Vielfach-Druckschrauben-Spannelemente (multiple jackbolt tensioner, MJT) bezeichnet. Sie werden beispielsweise unter dem Markennamen NordLock® SuperBolt® vertrieben und sind dem Fachmann aus der US 5,083,889 A bekannt.

Die Spannmutter wird auf einen zentralen Bolzen geschraubt, welcher dann mit mehreren zum zentralen Bolzen parallel ausgerichteten Druckschrauben in den in den Mutterkörper eingebrachten Gewindeöffnungen auf Zug gespannt wird. Neben Aspekten von Montagezeitersparnis, einfacher Handhabung (es kann übliches Handwerkzeug verwendet werden) usw. ist einer der Hauptvorteile solcher Spannelemente, dass die Belastung des Gewindes des zentralen Bolzens durch eine Stülpverformung des Mutterkörpers gleichmäßiger ausfällt als bei einer konventionellen Starrmutter, da die ersten Gewindegänge bei der elastischen Verformung des Mutterkörpers entlastet werden. Die Stülpverformung ist einerseits gewünscht, sorgt aber andererseits auch für Biegemomente innerhalb der Druckschrauben sowie einen Schiefstand derselben.

Die Stülpverformung hängt direkt von der Geometrie des Mutterkörpers sowie den elastischen Konstanten des Grundmaterials des Mutterkörpers ab und kann daher nicht unabhängig von der axialen Zugkraft eingestellt werden. In gewissen, durch den verfügbaren Bauraum gegebenen Grenzen kann zwar die elastische Verformung des Mutterkörpers durch die radiale Position der Druckschrauben in Abhängigkeit von den Axialkräften eingestellt werden. Bei gegebener Geometrie (Bauraum), Axialkraft und Mutterkörper-Material sind jedoch keine Design-Freiheitsgrade mehr vorhanden.

Es ist daher Aufgabe der Erfindung, eine Spannmutter der eingangs genannten Art anzugeben, welche eine verbesserte Kraftübertragung zwischen der Spannmutter und einem Gewindebolzen ermöglicht.

Die Aufgabe wird durch eine erfindungsgemäße Ausführungsform nach der Lehre des Anspruchs 1 gelöst. Vorteilhafte Ausführungsformen sind Gegenstand der Unteransprüche.

Die gattungsgemäße Spannmutter weist eine zentrische Bolzenachse auf, welche definiert wird durch eine die Spannmutter durchdringende mittig angeordnete Bolzenaufnahme. Die Bolzenaufnahme ist mit einem Innengewinde zur Aufnahme eines Gewindebolzens versehen. Quer zur Bolzenachse liegt einerseits die Unterseite und gegenüberliegend die Oberseite, wobei die Unterseite und die Oberseite am Außenumfang von der Außenfläche verbunden wird. Die Formgebung der Unterseite, der Oberseite und der Außenfläche ist zunächst unerheblich. Im einfachsten Fall wird die Unterseite und die Oberseite eben ausgeführt und die Außenfläche zylindrisch. Da diese Flächen bestimmungsgemäß jedoch nicht zur Anlage an einem anderen Bauteil kommen, sind hiervon abweichende Formgebungen ohne Belang. (Bspw. könnte die Spannmutter sechseckig oder quadratisch ausgeführt sein und eine gewölbte oder konische Oberseite und/oder Unterseite aufweisen.)

Die Bolzenachse umgebend befinden sich in der Spannmutter im Umfang verteilt mehrere Schraubenbohrungen, welche jeweils eine Schraubenachse definieren. Es ist zunächst unerheblich, ob die Schraubenbohrungen gleichmäßig oder ungleichmäßig (bspw. paarweise) verteilt am Umfang angeordnet sind. Ebenso ist es zunächst unerheblich, ob der Abstand von der jeweiligen Schraubenbohrung zur Bolzenaufnahme in allen Fällen gleich ist. Ein welchselnder geringerer und größerer Abstand führt zu einer ebenso tauglichen Ausführung. Erforderlich ist es jedoch, dass sowohl die Bolzenaufnahme als auch die Schraubenbohrungen die Spannmutter von der Oberseite bis zur Unterseite durchdringen, wobei in jedem Fall ein Mindestabstand zwischen den Schraubenbohrungen und der Bolzenaufnahme verbleibt (d.h. dass die Schraubenbohrungen nicht die Bolzenaufnahme schneiden).

Die Lastübertragung zwischen der Spannmutter und dem Gewindebolzen wird erfindungsgemäß nunmehr dadurch verbessert, indem die Schraubenbolzen geneigt zur Bolzenaufnahme angeordnet werden. Dieses führt zu einem Neigungswinkel zwischen der Schraubenachse und der Bolzenachse, welche größer als Null ist. Dabei ist es erforderlich, dass der Abstand der Schraubenbohrung zur Bolzenaufnahme an der Oberseite größer als an der Unterseite ist.

Die Erfindung geht dabei von der Überlegung aus, dass die Stülpverformung letztlich dadurch erzeugt wird, dass die Axialkraft der Druckschrauben eine radiale Komponente hat, da die resultierende Kraft innerhalb des Mutterkörpers in der Linie zwischen Angriffspunkt (Mitte der Schraubenbohrung nahe der Unterseite) und effektivem Presspunkt (im Innengewinde nahe der Oberseite) wirkt. Diese Linie steht nicht parallel zur Bolzenachse der Spannmutter. Durch eine Neigung der Druckschrauben um einen Neigungswinkel α kann eine radiale Komponente der Axialkraft in einem erweiteren Bereich frei gewählt werden, zumindest unabhängig vom Höhen-SeitenVerhältnis des Mutterkörpers. Wird eine Vergrößerung radiale Komponente zur Vergrößerung der Stülpverformung gefordert, so kann eine Spannmutter mit stärker geneigten Druckschraubengewinden gewählt werden. Dadurch steigt die radiale Komponente, ohne dass die Druckschrauben unter Erhöhung der Axialkraft stärker angezogen werden müssen.

Wenngleich eine Radiärsymmetrie nicht zwingend für die gattungsgemäße oder erfindungsgemäße Ausführung ist, so ist es dennoch hinsichtlich der Auslegung und der Fertigung von Vorteil, wenn die Schraubenbohrungen gleichmäßig im Umfang verteilt angeordnet werden. Ebenso ist es vorteilhaft, wenn alle Schraubenbohrungen zumindest an der Unterseite den gleichen Abstand zur Bolzenaufnahme aufweisen. Die Ausführung aller Schraubenbohrungen mit übereinstimmendem Durchmesser des Gewindes vereinfacht weiterhin die Realisierung der Spannmutter sowie dessen Verwendung.

Vorteilhafterweise sind die Achsen jeder zylindrischen Öffnung für die Druckschrauben im gleichen Neigungswinkel gegen die Bolzenachse geneigt. Hierdurch kann am einfachsten eingehalten eine gleichmäßige Kräfteverteilung erzielt werden.

Zunächst einmal sind die Durchmesserverhältnisse zwischen der Bolzenaufnahme und den Schraubenbohrungen unerheblich. Um jedoch eine optimale Spannungsverteilung zu erzielen bzw. um bei gegebenen Bauraum oder gegebenen Durchmesser der Bolzenaufnahme eine maximale Kraftübertragung zu erzielen ist es vorteilhaft, wenn die Querschnittsfläche der Bolzenaufnahme ähnlich der Querschnittsfläche der Schraubenbohrungen in Summe zusammen betrachtet entspricht. Hierbei ist es vorteilhaft, wenn die Querschnittsflächen aller Schraubenbohrungen zumindest 50% und höchstens 200% der Querschnittsfläche der Bolzenaufnahme entspricht. Besonders vorteilhaft ist es, wenn die Querschnittsflächen aller Schraubenbohrungen zumindest 80% und/oder höchstens 120% der Querschnittsfläche der Bolzenaufnahme entspricht.

Die Wahl des am besten geeigneten Neigungswinkels richtet sich nach den geometrischen Verhältnissen der Spannmutter bezüglich deren Höhe sowie dem Abstand zwischen der Schraubenachse und dem Innengewinde der Bolzenaufnahme. Weiterer Faktor zur Bestimmung des vorteilhaften Neigungswinkels ist die zu erzielende Zugkraft im Gewindebolzen. Eine genauere Betrachtung zu den Kräfteverhältnissen im Verhältnis zu den vorteilhaften Winkeln wird erläuternd zu der Figurenbeschreibung durchgeführt. Zumindest ist es vorteilhaft, wenn der Neigungswinkel zwischen der Schraubenachse und der Bolzenachse zwischen 1° und 30° beträgt.

Ein erfindungsgemäßes Spannsystem umfasst zunächst einmal eine erfindungsgemäße Spannmutter in einer Ausführung gemäß vorheriger Beschreibung. Weiterhin umfasst das Spannsystem analog der gattungsgemäßen Ausführung eine in jeder Schraubenbohrung eingedrehte Druckschraube sowie eine Unterlegscheibe, deren Innendurchmesser größer als der Durchmesser der Bolzenaufnahme in der Spannmutter ist. Jedoch muss der Innendurchmesser kleiner sein, als es sich aus dem Abstand zur Schraubenbohrung ergibt, d.h. kleiner als das Doppelte des Abstands vom der Schraubenbohrung an der Unterseite zur Bolzenachse. Die Unterlegscheibe weist eine zur Unterseite der Spannmutter weisende Druckfläche und eine gegenüberliegende zum Bauteil weisende Auflagefläche auf.

Zur weiteren Verbesserung der Spannungsverteilung und der Lastübertragung von der Spannmutter auf einen Gewindebolzen wird die erfindungsgemäßen Ausführung des Spannsystem über die Verwendung einer erfindungsgemäßen Spannmutter hinaus mit einer Unterlegscheibe versehen, dessen Druckfläche nach außen hin abfallend geneigt, ausgeführt wird. D.h. die Stärke der Unterlegscheibe reduziert sich vom Innendurchmesser hin zum Außenumfang.

Eine derartige Unterlegscheibe bildet mit der Druckfläche eine Auflage für jeweils ein stirnseitiges Ende der Druckschrauben. Wird die Druckfläche in einer vorteilhaften Neigung ungefähr entsprechend der Schraubenbohrungen geneigt, sorgt dies für ein nahezu senkrechtes Auftreffen der Druckschrauben auf die Unterlegscheibe und Biegemomente in den Druckschrauben werden minimiert.

In vorteilhafter und einfacher Ausführung ist die Auflagefläche - wie dies bei Unterlegscheiben üblich ist - plan ausgeführt.

Weiterhin ist die Unterlegscheibe vorteilhafterweise rotationssymmetrisch ausgebildet. Dies erleichtert die Montage und deren Herstellung.

Hierbei ist es weiterhin vorteilhaft, ein Druckwinkel zwischen der Druckfläche und der Bolzenachse mindestens einem Winkel von 90° minus den Neigungswinkel entspricht. Hierdurch wird vermieden, dass unkontrollierte nach außen weisende Querkräfte auf die Druckschrauben aufgrund der Auflage auf der geneigten Druckfläche entstehen.

Um diese Druckfläche weiter zu optimieren, entspricht der Druckwinkel vorteilhafterweise höchstens, besonders vorteilhaft genau, einem Winkel von 90° minus dem Neigungswinkel minus einem Quotient aus einer maximalen Überdeckungsreduktion des Innengewindes der Spannmutter und der Höhe der Spannmutter in Richtung der Bolzenachse. Unter der Überdeckungsreduktion wird hierbei die absolute erlaubte Änderung der Gewindeüberdeckung des Innengewindes infolge der Stülpverformung bezeichnet. Diese sollte vorteilhafterweise relativ zwischen 5% und 50% betragen.

Die mit der Erfindung erzielten Vorteile bestehen insbesondere darin, dass durch eine Schrägstellung der Druckschrauben einer Spannmutter die gewünschte Vergleichmäßigung der Gewindebelastung durch Stülpverformung bereits bei geringeren Axialkräften genutzt werden kann. Das ist in allen Anwendungsfällen sinnvoll, wo die Belastung des zentralen Gewindes problematischer als die Zugbelastung des zentralen Bolzens ist. Bei Verwendung einer geneigten Auflagefläche einer Unterlegscheibe können Biegemomente in den Druckschrauben minimiert werden.

Die Erfindung wird anhand von Zeichnungen näher erläutert. Darin zeigen:
- FIG 1: ein auf einem Bauteil aufgesetzte und auf einen Gewindebolzen aufgeschraubtes Spannsystem nach dem Stand der Technik im Längsschnitt;
- FIG 2: eine schematische Darstellung der Spannmutter im Längsschnitt;
- FIG 3: eine Darstellung der Kraftflüsse in der Spannmutter;
- FIG 4: eine schematische Darstellung einer Spannmutter mit geneigten Gewindegängen für Druckschrauben im Längsschnitt;
- FIG 5: eine Darstellung der Kraftflüsse in der Spannmutter und
- FIG 6: eine schematische Darstellung eines beispielhaften erfindungsgemäßen Spannsystems.

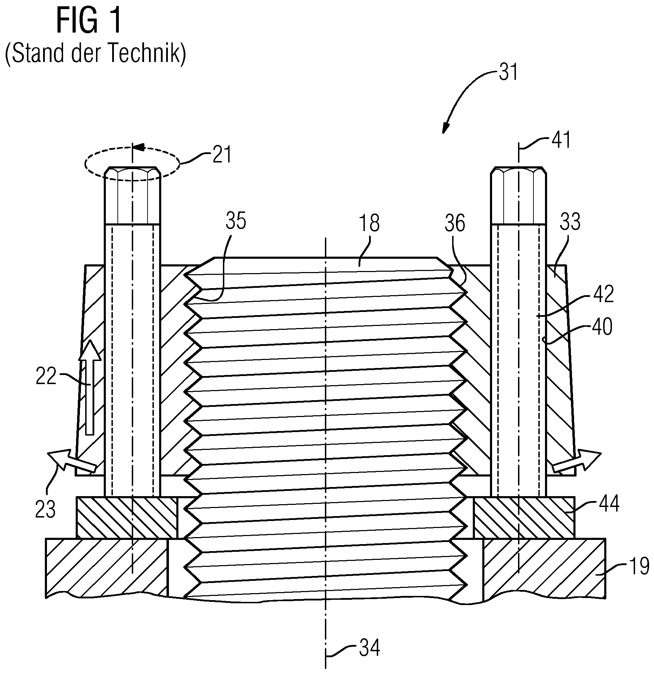

Die FIG 1 zeigt im Längsschnitt ein Spannsystem 31 mit einer Spannmutter 33 gemäß dem Stand der Technik. Diese ist ringförmig ausgestaltet und weist eine zylindermantelförmige radiale Außenfläche auf. Konzentrisch zur Achse 34 dieser Außenfläche ist eine zentrale zylindrische Bolzenaufnahme 35 in der Mitte der Spannmutter 33 eingebracht, welche die Spannmutter 33 in axialer Richtung durchdringt und mit einem Innengewinde 36 versehen ist.

Die Spannmutter 33 dient dazu, einen Gewindebolzen 18 eines Bauteils 19 auf Zug zu spannen. Hierzu ist um den Gewindebolzen 18 zunächst eine plane kreisscheibenförmige Unterlegscheibe 44 auf das Bauteil 19 gelegt, deren Innendurchmesser geringfügig größer als der Außendurchmesser des Gewindebolzens 18 ist. Sodann ist die Spannmutter 33 auf den Gewindebolzen 18 geschraubt.

Zur Fixierung unter möglichst gleichmäßiger Kraftverteilung weist die Spannmutter 33 in zur Achse 34 radiärsymmetrischer Anordnung mehrere zylindrische Gewindebohrungen 40 mit Innengewinde auf, die parallel zur Achse 34 des zentralen Bolzenaufnahme 35 verlaufen und in die jeweils eine Druckschraube 42 eingeschraubt ist. Deren Durchmesser ist deutlich geringer als der Durchmesser der Bolzenaufnahme 35. In der Schnittzeichnung der FIG 1 sind zwei Druckschrauben 42 zu sehen. Die weiteren in der Spannmutter angeordneten Druckschrauben 42 sind identisch ausgebildet und im Umfang verteilt in gleicher Weise angeordnet. Ihr Schraubenkopf ist für einen Außenantrieb in Form eines Außen-Sechskants ausgebildet.

Die Druckschrauben 42 werden nun um ihre jeweilige Achse 41 gedreht, wobei eine Druckkraft auf die Unterlegscheibe 44 erzeugt wird. Dies führt zu einer entgegengesetzten Bewegung der Spannmutter 33 in einer Spannrichtung 26 und entsprechend zu einer Druckkraft in der Spannmutter 33 und einer Zugkraft in dem Gewindebolzen 17. Die Druckspannung in Richtung der Spannrichtung in Verbindung mit dem radialen Abstand der Angriffspunkte zwischen Achse 41 der Druckschrauben 42 und dem Innengewinde 36 führt zu einer Stülpverformung der Spannmutter 33 derart, dass die Spannmutter 33 am oberen, d. h. vom Bauteil 19 entfernten Bereich radial nach innen verformt wird, während am dem Bauteil 19 nahgelegensten Bereich eine Verformung radial nach außen in der Verformungsrichtung 23 erfolgt.

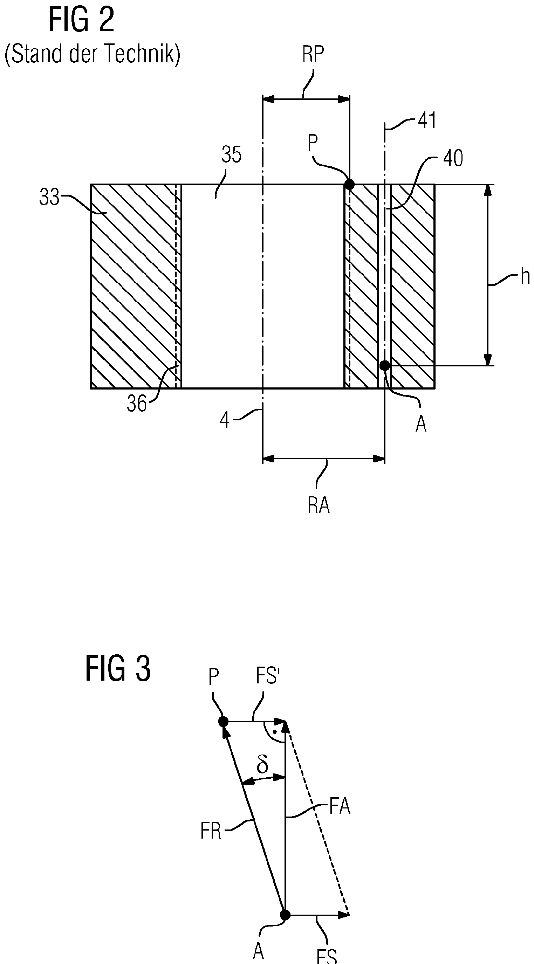

Der Verformungsmechanismus wird anhand der FIG 2 und FIG 3 noch näher erläutert. FIG 2 zeigt schematisch allein die Spannmutter 33 aus FIG 1 in gleicher Ansicht, jedoch der Übersicht halber mit nur einer Gewindebohrung 40. FIG 2 zeigt zunächst die für die Stülpverformung relevanten geometrischen Werte: Dies ist zunächst der Angriffspunkt A am dem Bauteil 19 zugewandten Ende der Gewindebohrung 40 in der Achse 41 mit dem Radius RA, an dem die durch das Einschrauben der Druckschrauben 42 erzeugte, auf die Spannmutter 33 wirkende axiale Druckkraft angreift. Weiterhin ist der Presspunkt P zu nennen, der am dem Bauteil 19 abgewandten axialen Ende der Spannmutter 33 am Innengewinde 36 der Bolzenaufnahme 35 liegt. Hier greift letztlich die Gegenkraft an. Der Presspunkt P liegt auf dem Radius RP, der dem Radius des Innengewindes 36 entspricht. Hieraus leitet sich eine Radiusdifferenz d = RA - RP ab. Der auf die Achse 34 bezogene Abstand zwischen Angriffspunkt A und Presspunkt P ist die Höhe h.

FIG 3 zeigt nun die sich einstellenden Kräfteverhältnisse in der Konfiguration nach FIG 2. Die Stülpverformung wird dadurch erzeugt, dass die Achse 41 der Druckschrauben 42 parallel beabstandet zum Innengewinde 36 liegt und eine von den Druckschrauben 42 erzeugte Druckkraft FA im Punkt A ein Moment um den Punkt P erzeugt. Die in der Spannmutter resultierende Kraft FR verläuft vom Punkt A in Richtung zum Punkt P. Hierdurch bedingt tritt eine radiale Komponente, die Stülpverformungskraft FS' als Differenz zwischen der resultierenden Kraft FR und der Axialkraft FA auf, die sich wie in FIG 3 gezeigt aus den Regeln zur Vektoraddition von Kräften ergibt.

Für den Stützwinkel δ zwischen der resultierender Kraft FR (Linie A-P) und der Druckkraft bzw. der axialen Kraft FA (Achse 34) gilt: tan δ = FS' ÷ FA. Der Stützwinkel δ ist aber auch aus den geometrischen Abmessungen der Spannmutter 33 ermittelbar, hier gilt: tan δ = (RA - RP) ÷ h. Die Stülpverformungskraft FS' wird damit durch die Anzugskraft FA sowie die geometrischen Verhältnisse der Spannmutter 33 definiert, nämlich durch FS' = FA x (RA - RP) ÷ h.

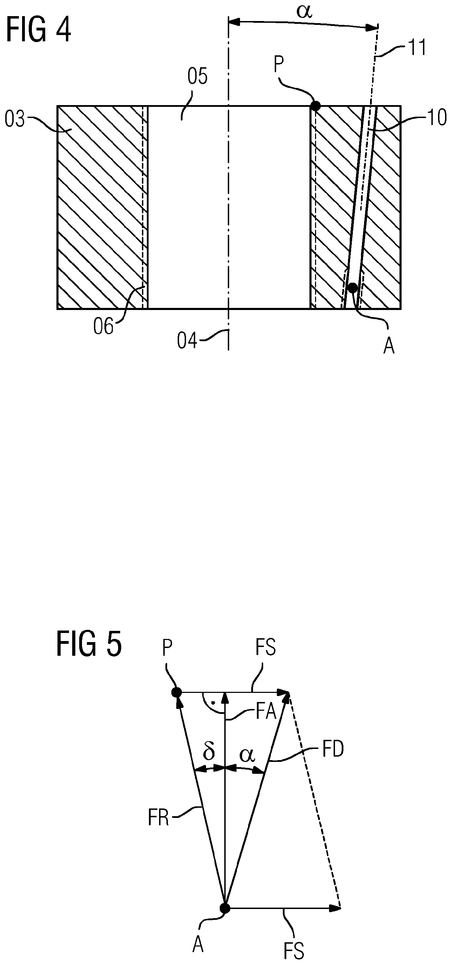

In der FIG 4 wird nunmehr eine erfindungsgemäße Ausführungsform einer Spannmutter 03 in analoger Ansicht zur Fig. 2 skizziert. Zu erkennen ist im Schnitt gleichfalls die mittige Bolzenaufnahme 05 mit dem Innengewinde06. Zentrisch zur Bolzenaufnahme liegt die Bolzenachse 04. Die Spannmutter 03 weist eine quer zur Bolzenachse 04 liegende Unterseite 07 und eine gegenüberliegende Oberseite 08 auf. Eine Außenfläche 09 verbindet am Außenumfang die Unterseite 07 mit der Oberseite 08. Im Umfang um die Bolzenaufnahme 05 verteilt durchdringen analag der bekannten Ausführung aus Fig. 2 eine Mehrzahl an Gewindebohrungen 10 die Spannmutter 03 von der Oberseite 08 bis zur Unterseite 07. Jede Gewindebohrung 10 definiert hierbei eine Schraubenachse 11.

Im Gegensatz zur vorherigen bekannten Ausführung sind bei dieser erfindungsgemäßen Ausführung der Spannmutter 03 die Gewindebohrungen 10 gegenüber der Bolzenachse 04 geneigt. Dieses führt zu einem Neigungswinkel α zwischen der Bolzenachse 04 und der Schraubenachse 11 größer als Null. In diesem Ausführungsbeispiel beträgt der Neigungswinkel α circa 10°. Wenngleich in diesem Schnitt nur eine Gewindebohrung 10 dargestellt ist, so ist vorgesehen, dass im Umfang verteilt eine Mehrzahl an Gewindebohrungen 10 im jeweils gleichen Abstand zueinander und im gleichem Abstand zur Bolzenaufnahme 05 und mit gleichem Neigungswinkel α vorhanden sind. Da die Lastübertragung von einer Druckschraube 12 auf die Spannmutter 03 lediglich im unteren Ende der Gewindebohrung 10 erfolgt ist es hinreichend, wenn nur dieses untere Ende ein Gewinde aufweist und der obere Bereich (circa 2/3 der Höhe der Spannmutter 03) mit größerem Durchmesser ohne Gewinde ausgeführt wird.

Der optimale Neigungswinkel α kann anhand der geometrischen Abmessungen der Spannmutter und der zu erzeugenden Zugkraft in einem Gewindebolzen 18 bestimmt werden. Hinsichtlich der Bereitstellung der optimierten Spannmuttern 03 kann wahlweise eine Vorhaltung einer Auswahl an Spannmuttern 03 mit einer Staffelung von verschiedenen Neigungswinkel α erfolgen oder die Gewindebohrungen 10 werden auftragsbezogen eingebracht.

Durch die Möglichkeit Spannmuttern 03 mit unterschiedlichen Neigungswinkel α bereitstellen zu können, entsteht ein neuer Freiheitsgrad hinsichtlich der resultierenden Stülpverformung, wie anhand der FIG 5 erläutert wird, die die Kraftverhältnisse in der Konfiguration nach FIG 4 zeigt, analog zu dem Schema aus FIG 3 für die bekannte Ausführung in FIG 2.

Wiederum wirkt die resultierende Kraft FR in der Linie zwischen Angriffspunkt A und Presspunkt P, die im Stützwinkel δ angeordnet ist. Die Druckkraft FD der Druckschrauben 18 wirkt nun jedoch nicht mehr in axialer Richtung, sondern entlang der Schraubenachse 11 mit dem Neigungswinkel α. Hierdurch vergrößert sich die Stülpverformungskraft FS ausgehend von zur Ausführung aus Fig. 3 übereinstimmenden Kraft FA in axialer Richtung. Es gilt: FS = FA x ((RA - RP) ÷ h + tan a). Für den Neigungswinkel α gilt damit: α = arc tan (FS ÷ FA - ((RA - RP) ÷ h)). Die folgende Tabelle zeigt den benötigten Neigungswinkel α in Grad bei gegebenem Größenverhältnis (RA - RP) ÷ h der Spannmutter 03 und gewünschtem Verhältnis von Stülpverformungskraft FS zu Axialkraft FA:

| FS÷FA | (RA - RP) ÷ h | | | | | | | | | | | |
|---|---|---|---|---|---|---|---|---|---|---|---|---|
| | 0,025 | 0,050 | 0,075 | 0,100 | 0,125 | 0,150 | 0,175 | 0,200 | 0,225 | 0,250 | 0,275 | 0,300 |
| 0,025 | 0,00 | | | | | | | | | | | |
| 0,050 | 1,43 | 0,00 | | | | | | | | | | |
| 0,075 | 2,86 | 1,43 | 0,00 | | | | | | | | | |
| 0,100 | 4,29 | 2,86 | 1,43 | 0,00 | | | | | | | | |
| 0,125 | 5,71 | 4,29 | 2,86 | 1,43 | 0,00 | | | | | | | |
| 0,150 | 7,13 | 5,71 | 4,29 | 2,86 | 1,43 | 0,00 | | | | | | |
| 0,175 | 8,53 | 7,13 | 5,71 | 4,29 | 2,86 | 1,43 | 0,00 | | | | | |
| 0,200 | 9,93 | 8,53 | 7,13 | 5,71 | 4,29 | 2,86 | 1,43 | 0,00 | | | | |
| 0,225 | 11,31 | 9,93 | 8,53 | 7,13 | 5,71 | 4,29 | 2,86 | 1,43 | 0,00 | | | |
| 0,250 | 12,68 | 11,31 | 9,93 | 8,53 | 7,13 | 5,71 | 4,29 | 2,86 | 1,43 | 0,00 | | |
| 0,275 | 14,04 | 12,68 | 11,31 | 9,93 | 8,53 | 7,13 | 5,71 | 4,29 | 2,86 | 1,43 | 0,00 | |
| 0,300 | 15,38 | 14,04 | 12,68 | 11,31 | 9,93 | 8,53 | 7,13 | 5,71 | 4,29 | 2,86 | 1,43 | 0,00 |
| 0,325 | 16,70 | 15,38 | 14,04 | 12,68 | 11,31 | 9,93 | 8,53 | 7,13 | 5,71 | 4,29 | 2,86 | 1,43 |
| 0,350 | 18,00 | 16,70 | 15,38 | 14,04 | 12,68 | 11,31 | 9,93 | 8,53 | 7,13 | 5,71 | 4,29 | 2,86 |
| 0,375 | 19,29 | 18,00 | 16,70 | 15,38 | 14,04 | 12,68 | 11,31 | 9,93 | 8,53 | 7,13 | 5,71 | 4,29 |
| 0,400 | 20,56 | 19,29 | 18,00 | 16,70 | 15,38 | 14,04 | 12,68 | 11,31 | 9,93 | 8,53 | 7,13 | 5,71 |
| 0,425 | 21,80 | 20,56 | 19,29 | 18,00 | 16,70 | 15,38 | 14,04 | 12,68 | 11,31 | 9,93 | 8,53 | 7,13 |
| 0,450 | 23,03 | 21,80 | 20,56 | 19,29 | 18,00 | 16,70 | 15,38 | 14,04 | 12,68 | 11,31 | 9,93 | 8,53 |
| 0,475 | 24,23 | 23,03 | 21,80 | 20,56 | 19,29 | 18,00 | 16,70 | 15,38 | 14,04 | 12,68 | 11,31 | 9,93 |
| 0,500 | 25,41 | 24,23 | 23,03 | 21,80 | 20,56 | 19,29 | 18,00 | 16,70 | 15,38 | 14,04 | 12,68 | 11,31 |

Werden höhere Stülpverformungskräfte FS schon bei geringen Axialkräften FA gewünscht, kann eine Spannmutter 1 mit größerem Neigungswinkel α verwendet werden.

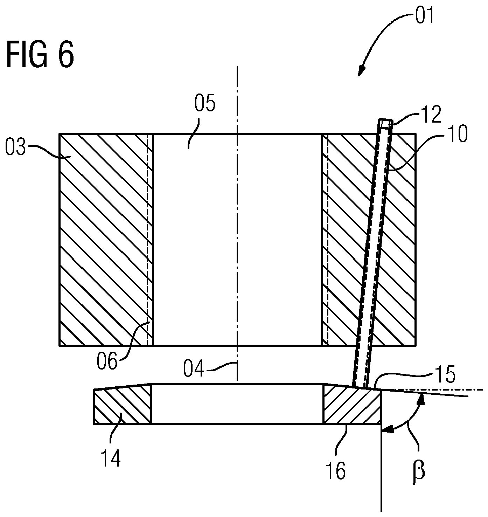

FIG 6 zeigt schließlich ergänzend zur Darstellung aus FIG 4 ein Spannsystem 01 mit zusätzlich eingebrachter Druckschraube 12 und einer modifizierten Unterlegscheibe 14. Die Unterlegscheibe 14 weist eine der Spannmutter 03 zugewandte nach außen abfallende Druckfläche 15 sowie eine auf dem Bauteil 19 zur Anlage kommende Auflagefläche 16 auf. Die Unterlegscheibe 14 ist in diesem Ausführungsbeispiel rotationssymmetrisch ausgebildet.

Die Druckfläche 15 ist gegen die Bolzenachse 04 in einem Druckwinkel β ausgerichtet. Dieser entspricht mindestens dem Winkel 90°minus dem Neigungswinkel α. Er ist jedoch in der FIG 6 noch geringfügig größer, da für ein optimales senkrechtes Auftreffen der Druckschrauben 12 auf die Druckfläche 15 auch die Stülpverformung zu berücksichtigen ist. Der Korrekturbetrag Δα, wobei der optimierte Druckwinkel β = 90° - α - Δα ist, ergibt sich aus der Größe der tatsächlichen elastischen Stülpverformung der Spannmutter 03. Diese ist konstruktiv gegeben und ergibt sich aus der absoluten Überdeckungsreduktion Δg des Innengewindes 06 der zentralen Bolzenaufnahme 05. Der Korrekturbetrag Δα kann (aufgrund der Verhältnisse von Δg << h) abgeschätzt werden durch: Δα = Δg ÷ h. Somit kann die ideale Unterlegscheibe 14 für eine gegebene Spannmutter 03 ermittelt werden, indem deren Druckwinkel β aus dem Winkel α, der Überdeckungsreduktion Δg und der axialen Höhe h bestimmt wird.

**Bezugszeichenliste**

| | | |
|---|---|---|
| 01 | 31 | Spannsystem |
| 03 | 33 | Spannmutter |
| 04 | 34 | Bolzenachse |
| 05 | 35 | Bolzenaufnahme |
| 06 | 36 | Innengewinde |
| 07 | | Unterseite |
| 08 | | Oberseite |
| 09 | | Außenfläche |
| 10 | 40 | Schraubenbohrung |
| 11 | 41 | Schraubenachse |
| 12 | 42 | Druckschraube |
| 14 | 44 | Unterlegscheibe |
| 15 | 45 | Druckfläche |
| 16 | | Auflagefläche |
| 18 | | Gewindebolzen |
| 19 | | Bauteil |
| 21 | | Antriebsbewegung |
| 22 | | Spannrichtung |
| 23 | | Verformungsrichtung |
| | | |
| A | | Angriffspunkt Druckschraube |
| P | | Angriffspunkt Gewindebolzen |
| RA | | Radius A um 04 bzw. 34 |
| RP | | Radius P um 04 bzw. 34 |
| h | | Abstand A-P parallel zu 04 bzw. 34 |
| d | | Radiusdifferenz A-P |
| FA | | Axialkraft = Druckkraft in 42 |
| FR | | Resultierende Kraft |
| FS | FS' | Stülpverformungskraft |
| FD | | Druckkraft in 12 |
| α | | Neigungswinkel zw. 04 und 11 |
| β | | Druckwinkel zw. 04 und 15 |
| δ | | Stützwinkel zw. 04 und FR |
| Δg | | Überdeckungsreduktion |

## Patentansprüche

1. Spannmutter (03) mit einer zentrischen Bolzenachse (04) und einer quer dazu (04) angeordneten Unterseite (07) und einer gegenüberliegenden Oberseite (08) und einer die Oberseite mit der Unterseite verbindenden Außenfläche (09), wobei eine Bolzenaufnahme (05), welche ein Innengewinde (06) aufweist, und eine Mehrzahl beabstandet von der Bolzenaufnahme (05) im Umfang verteilt angeordneter Schraubenbohrungen (10), welche jeweils eine Schraubenachse (11) aufweisen und die Spannmutter (03) von der Oberseite (08) bis zur Unterseite (07) durchdringen,
**dadurch gekennzeichnet,**
**dass** die Schraubenachse (11) geneigt zur Bolzenachse (04) angeordnet ist, wobei der Abstand der Schraubenbohrung (10) zur Bolzenaufnahme (05) an der Oberseite (08) größer als an der Unterseite (07) ist.

2. Spannmutter (03) nach Anspruch 1,
**dadurch gekennzeichnet,**
**dass** die Schraubenbohrungen (10) gleichmäßig im Umfang verteilt angeordnet sind und alle (10) den gleichen Abstand zur Bolzenachse (04) und den gleichen Durchmesser aufweisen.

3. Spannmutter (03) nach Anspruch 1 oder 2,
**dadurch gekennzeichnet,**
**dass** die Neigung aller Schraubenbohrungen (10) gleich ist.

4. Spannmutter (03) nach einem der Ansprüche 1 bis 3,
**dadurch gekennzeichnet,**
**dass** die Querschnittsflächen aller Schraubenbohrungen (10) in Summe zumindest 50%, insbesondere zumindest 80%, und höchstens 200%, insbesondere höchstens 120%, der Querschnittsfläche der Bolzenaufnahme (05) beträgt.

5. Spannmutter (03) nach einem der Ansprüche 1 bis 4,
**dadurch gekennzeichnet,**
**dass** ein Neigungswinkel (α) zwischen der Bolzenachse (04) und der Schraubenachse (11) größer als 1° und kleiner als 30° beträgt.

6. Spannsystem (01), umfassend eine Spannmutter (03) nach einem der vorhergehenden Ansprüche und in den jeweiligen Schraubenbohrungen (10) angeordnete Druckschrauben (12) sowie eine Unterlegscheibe (14), deren (14) Innendurchmesser größer als der Durchmesser der Bolzenaufnahme (05) und kleiner als das Doppelte des Abstands von der Schraubenbohrung (10) zur Bolzenachse (04) ist und die (14) eine zur Unterseite (07) weisende Druckfläche (15) aufweist,
**dadurch gekennzeichnet,**
**dass** die Druckfläche (15) nach außen abfallend geneigt ist.

7. Spannsystem (01) nach Anspruch 6,
**dadurch gekennzeichnet,**
**dass** ein Druckwinkel (β) zwischen der Bolzenachse (04) und der Druckfläche (15) mindestens einem Winkel von 90° minus dem Neigungswinkel (α) entspricht.

8. Spannsystem (01) nach Anspruch 6 oder 7,
**dadurch gekennzeichnet,**
**dass** die Bolzenaufnahme (05) eine Innengewindelänge (h) und das Innengewinde (06) eine bestimmungsgemäß maximal zulässige Überdeckungsreduktion (Δg) aufweist, wobei ein Druckwinkel (β) zwischen der Bolzenachse (04) und der Druckfläche (15) höchstens einem Winkel von 90° minus dem Neigungswinkel (α) plus einem Quotienten aus der Überdeckungsreduktion (Δg) und der Innengewindelänge (h) entspricht.

## Claims

1. A clamping nut (03) having a centric pin axis (04) and a lower side (07) arranged transversely thereto (04) and an opposed upper side (08) and an outer surface (09) connecting the upper side to the lower side, wherein a pin receptacle (05), which has an internal thread (06), and a plurality of screw holes (10) which are disposed at a distance from the
pin receptacle (05) and distributed in the circumference, which each have a screw axis (11) and penetrate the clamping nut (03) from the upper side (08) until the lower side (07),
**characterized in**
**that** the screw axis (11) is arranged such that is inclined to the pin axis (04), wherein the distance of the screw hole (10) to the pin receptacle (05) on the upper side (08) is greater than on the lower side (07).

2. A clamping nut (03) according to claim 1,
**characterized in**
**that** the screw holes (10) are arranged such that they are evenly distributed in the circumference and all (10) have the same distance to the pin axis (04) and the same diameter.

3. A clamping nut (03) according to claim 1 or 2,
**characterized in**
**that** the slope of all screw holes (10) is the same.

4. A clamping nut (03) according to any one of claims 1 to 3,
**characterized in**
**that** the cross-sectional areas of all screw holes (10) are overall at least 50%, in particular at least 80%, and at most 200%, in particular at most 120%, of the cross-sectional area of the pin receptacle (05).

5. A clamping nut (03) according to any one of claims 1 to 4,
**characterized in**
**that** an angle of slope (α) between the pin axis (04) and the screw axis (11) is greater than 1° and less than 30°.

6. A clamping system (01), comprising a clamping nut (03) according to any one of the preceding claims and pressure screws (12) arranged in the respective screw holes (10) as well as a washer (14), the internal diameter (14) of which is greater than the diameter of the pin receptacle (05) and less than twice the distance from the screw hole (10) to the pin axis (04) and which (14) has a pressure surface (15) facing the lower side (07),
**characterized in**
**that** the pressure surface (15) is inclined such that it is sloping outwards.

7. A clamping system (01) according to claim 6,
**characterized in**
**that** a pressure angle (β) between the pin axis (04) and the pressure surface (15) corresponds to at least one angle of 90° minus the angle of slope (α).

8. A clamping system (01) according to claim 6 or 7, **characterized in**
**that** the pin receptacle (05) has an internal thread length (h) and the internal thread (06) has a conventionally maximum allowed coverage reduction (Δg), wherein a pressure angle (β) between the pin axis (04) and the pressure surface (15) corresponds at most to an angle of 90° minus the angle of slope (α) plus a quotient from the coverage reduction (Δg) and the internal thread length (h).

## Revendications

1. Ecrou de serrage (03) comprenant un axe de boulon centré (04) et un côté inférieur (07) arrangé transversalement à celui-ci (04) et un côté supérieur (08) opposé et une surface extérieure (09) reliant le côté supérieur au côté inférieur, dans lequel un récipient de boulon (05) présentant un filetage intérieur (06) et une pluralité d'alésages de vis (10) qui sont espacés du récipient de boulon (05) et distribués dans la circonférence, chacun ayant un axe de vis (11) et pénètrent l'écrou de serrage (03) à partir du côté supérieur (08) jusqu'au côté inférieur (07),
**caractérisé en ce que**
l'axe de vis (11) est arrangé de manière inclinée à l'axe de boulon (04), la distance de l'alésage de vis (10) au récipient de boulon (05) au niveau du côté supérieur (08) est supérieure à celle au niveau du côté inférieur (07).

2. Ecrou de serrage (03) selon la revendication 1,
**caractérisé en ce que**
les alésages de vis (10) sont repartis régulièrement dans la circonférence, et tous (10) présentent la même distance à l'axe de boulon (04) et le même diamètre.

3. Ecrou de serrage (03) selon la revendication 1 ou 2,
**caractérisé en ce que**
l'inclinaison de tous les alésages (10) est la même.

4. Ecrou de serrage (03) selon l'une quelconque des revendications 1 à 3,
**caractérisé en ce que**
les aires de coupe transversale de tous les alésages de vis (10) s'élèvent en somme à au moins 50%, particulièrement au moins 80%, et au plus 200%, particulièrement au plus 120%, de l'aire du récipient de boulon (05).

5. Ecrou de serrage (03) selon l'une quelconque des revendications 1 à 4,
**caractérisé en ce qu'**un angle d'inclinaison (α) entre l'axe de boulon (04) et l'axe de vis (11) est supérieur à 1° et inférieur 30°.

6. Système de serrage (01), comprenant un écrou de serrage (03) selon l'une quelconque des revendications précédentes et des vis de pression (12) arrangés dans les alésages de vis (10) respectifs ainsi qu'une rondelle (14), dont (14) le diamètre intérieur est supérieur au diamètre du récipient de boulon (05) et inférieur à deux fois la distance de l'alésage de vis (10) à l'axe de boulon (04), et qui (14) présente une surface de pression (15) en face du côté inférieur (07),
**caractérisé en ce que**
la surface de pression (15) est inclinée de manière à pencher vers l'extérieur.

7. Système de serrage (01) selon la revendication 6,
**caractérisé en ce qu'**un angle de pression (β) entre l'axe de boulon (04) et la surface de pression (15) correspond à au moins un angle de 90° moins l'angle d'inclinaison (α).

8. Système de serrage (01) selon la revendication 6 ou 7, **caractérisé en ce que** le récipient de boulon (05) comporte une longueur de filetage intérieur (h) et le filetage intérieur (06) présente une réduction de couverture maximale (Δg) conventionnellement permise, l'angle de pression (β) entre l'axe de boulon (04) et la surface de pression (15) correspondant au plus à un angle de 90° moins l'angle d'inclinaison α) plus un quotient depuis la réduction de couverture (Δg) et la longueur de filetage intérieur (h).
